# EUROPEAN PATENT APPLICATION

(11) **EP 3 757 647 A1**
(43) Date of publication of application: **30.12.2020**
(21) Application number: 19216025.7
(22) Date of filing: 13.12.2019
(51) Int. Cl.: G02B 21/00, G02B 21/10, G02B 21/18, G02B 21/36

(54) **MULTI-VIEW LIGHT-SHEET MICROSCOPE WITH AN OPTICAL ARM COMBINER**

(30) Priority: 27.06.2019 US 201962867268 P; 08.11.2019 US 201916679024
(71) Applicant: Vladimirov, Nikita, 13187 Berlin (DE); Preibisch, Stephan, 01558 Grossenhain (DE)
(72) Inventor: Vladimirov, Nikita, 13187 Berlin (DE); Preibisch, Stephan, 01558 Grossenhain (DE)
(74) Representative: FRKelly

(57) **Abstract**

A light-sheet fluorescence microscope has a laser producing a light beam, two objective lenses arranged with their optical axes in different directions to provide different views, a scanning mirror configured to direct the light beam into distinct portions of an optical path, a beam combining/separating component configured to direct the light beam in the distinct portions of the optical path alternately into each of the two objective lenses and to combine detection light from the two objective lenses into the distinct portions of the optical path, a dichroic mirror that separates the light beam from detection light, and a camera sensor focused simultaneously on the focal planes of said two objective lenses. Embodiments may also include an adaptive optics or fixed corrective element.

## Description

### CROSS-REFERENCE TO RELATED APPLICATIONS

This application claims priority from US Provisional Patent Application 62/867268 filed 6/27/2019, which is incorporated herein by reference.

### STATEMENT REGARDING FEDERALLY SPONSORED RESEARCH OR DEVELOPMENT

None.

### FIELD OF THE INVENTION

The present invention relates generally to optical microscopy. More specifically, it relates to improved methods and devices for light-sheet fluorescence microscopy (LSFM).

### BACKGROUND OF THE INVENTION

Light-sheet fluorescence microscopy, also known as selective-plane illumination microscopy (SPIM), is the primary tool of choice for imaging live and fixed organisms, due to its fast speed, low photo-toxicity, isotropic resolution, and optical sectioning capabilities. In a typical LSFM setup, a light sheet is generated by a dedicated low numerical aperture (NA) objective or a cylindrical lens, and the light emitted by fluorescence molecules is detected by another, preferably high-NA objective.

Due to physical properties of the point-spread-function (PSF), the detection with a single objective has lower axial (z) resolution compared to lateral (x-y) resolution, which is often undesired. To improve the spatial resolution, multi-view arrangements were suggested. In these designs, orthogonal pairs of objectives with similar or equal NA are employed for light sheet generation and fluorescence detection. The roles of the objectives can be dynamically swapped during the experiment, so each objective either generates a light sheet or detects fluorescence. By combining multi-view images of the specimen with post-processing algorithms (fusion and deconvolution), a three-dimensional volume of the specimen with improved spatial resolution can be reconstructed.

The multi-view LSFM microscopes typically employ two or more independent optical arms with similar components, including laser ports, galvanometric mirrors, dichroic mirrors, cameras, and in some cases adaptive optics. These components usually perform similar functions, and differ mainly by their angular orientation with respect to the specimen. The use of multiple arms becomes especially costly when complex opto-electronic devices are used in each optical arm, for example, when adaptive optics is used to correct system aberrations in two or more views.

### BRIEF SUMMARY OF THE INVENTION

According to one aspect, a multi-view light-sheet microscope has an arm combiner that optically combines two optical arms into one path. The combined optical path can be used two-ways, i.e., for both illumination and detection. This aspect allows several opto-electronic components to be shared between the two arms.

The combined optical path contains pairs of detection image planes from the two views, separated spatially (side by side). The combined optical path also includes an optical plane that is conjugate to the pupil (Fourier) planes of the two microscope objectives, separated angularly by a constant phase tilt.

Applications of the invention include microscopes with complex adaptive optics or fixed corrective element to correct system aberrations in two or more views. One such example is a specimen mounted inside a microchannel of a microfluidic chip. The microfluidic chip is typically made of glass plate with one or more layers of transparent polymer (such as PDMS) on top. Micro-channels are etched or molded within the polymer layer before attaching it to the glass. A dual-view LSFM microscope compatible with microfluidic chips would need to illuminate and detect light from the sample through a glass plate at a 45° angle to the glass surface, and overcome the same aberrations in each of the two views. Another example is a microscopy specimen conventionally mounted under a glass coverslip. In this case, a dual-view LSFM microscope has the same type of aberrations as with microfluidic chips, due to imaging at a 45° angle through the glass.

The present invention provides an improved LSFM technique and apparatus that combines two or more imaging arms into a shared optical path. One benefit is that light wavefronts can be corrected with adaptive optics or fixed corrective element in multiple views simultaneously. Additionally, sharing the adaptive optics, camera, and laser between two or more views significantly reduces the cost and complexity of LSFM microscopes.

In one aspect, the invention provides a light-sheet fluorescence microscope comprising a laser producing a light beam, two objective lenses arranged with their optical axes in different directions to provide different views, a scanning mirror configured to direct the light beam into distinct portions of an optical path, a beam combining/separating component configured to direct the light beam in the distinct portions of the optical path alternately into each of the two objective lenses and to combine detection light from the two objective lenses into the distinct portions of the optical path, a dichroic mirror that separates the light beam from detection light, and a camera sensor focused simultaneously on the focal planes of said two objective lenses. Preferably, the scanning mirror is configured to generate a light sheet illumination pattern by scanning said light beam alternately in each of the distinct portions of the optical path.

The light-sheet fluorescence microscope may include an adaptive optics element or a fixed corrective element configured to correct optical aberrations in each of said two objective lenses. The adaptive optics element may be configured to pre-compensate for optical aberrations in said illumination light beam. The scanning mirror and adaptive optics element may be implemented by a single device.

In one aspect, the invention provides a light-sheet fluorescence microscope comprising two microscopes as described above, arranged to achieve illumination and detection from four directions.

In one aspect, the invention provides a method for light-sheet fluorescence microscopy comprising simultaneously receiving light from a specimen by two objective lenses arranged with their optical axes in different directions to provide different views, combining the received light into distinct portions of a single optical path, and simultaneously imaging the combined light by a single camera sensor.

The method may also include simultaneously reshaping the combined light by a single adaptive optics element or fixed corrective element. The method may also include generating a laser beam by a single laser; scanning the laser beam alternatively to follow the distinct portions of the single optical path; and illuminating the specimen by the distinct laser beams focused by the two objective lenses.

Accordingly, there are several advantages:
(1) The cost, complexity, and size of a multi-view LSFM microscope is reduced by sharing multiple opto-electronic devices between two imaging views.
(2) In one embodiment, multiple views from both objectives can be imaged simultaneously by one camera sensor.
(3) In one aspect, a single scanning mirror directs the illumination laser into either view and also digitally scans it to generate light sheet illumination.
(4) In one embodiment, a single adaptive optics element or fixed corrective element can correct aberrations in two objectives simultaneously, in both illumination and detection light paths.
(5) In one embodiment, a single adaptive optics element or fixed corrective element can correct aberrations in two objectives simultaneously in the illumination-only light path.
(6) In one embodiment, a single adaptive optics element or fixed corrective element can correct aberrations in two objectives simultaneously in the detection-only light path.
(7) In one embodiment, dual-view imaging is possible through a glass bottom plate of a microfluidic chip or chamber, by using a single adaptive optics element or fixed corrective element.

### BRIEF DESCRIPTION OF THE SEVERAL VIEWS OF THE DRAWINGS

**Fig. 1A** is a perspective view of a dual-view light-sheet microscope with optical arm combiner according to one embodiment.
**Fig. 1B** is a schematic view of an illumination light path in the microscope of **Fig. 1A****.**
**Fig. 1C** is a schematic view of the detection light path in the microscope of **Fig. 1A****.**
**Figs. 2A-2F** show applications of the multi-view light-sheet microscope of **Fig. 1A****,** where **Figs. 2A, 2C, 2E** illustrate imaging of a specimen in immersion medium without refractive index mismatch, and **Figs. 2B, 2D, 2F** illustrate imaging through a flat glass plate.
**Figs. 3A-3B** show experimental data on imaging specimens inside a microfluidic chamber using the microscope of **Fig. 1A**, where **Fig. 3A** shows images of a fluorescent microsphere before and after correction with adaptive optics, and **Fig. 3B** shows images of a head region of nematode *C.elegans* with fluorescently labelled neurons imaged before and after adaptive optics correction (single-view), and imaged in two views with an additional post-processing (multi-view deconvolution).
**Fig. 4** is a schematic view of a dual-view light-sheet microscope according to another embodiment, in which adaptive optics is applied only in the detection path.
**Fig. 5** is a schematic view of a dual-view light-sheet microscope according to another embodiment, in which adaptive optics is applied only in the illumination path.
**Fig. 6** is a schematic view of a dual-view light-sheet microscope according to another embodiment, without adaptive optics.
**Fig. 7** is a schematic view of a quad-view light-sheet microscope according to another embodiment. The four views are achieved by combining two embodiments shown in **Fig. 6****.**

**List of Reference Numerals**

| | |
|---|---|
| **1, 2, 101, 102, 201, 202, 301, 302, 401, 402, 501, 502** | microscope objectives |
| **3, 4, 103, 104, 203, 204, 303, 304, 403, 404, 503, 504** | folding mirrors |
| **5, 6, 105, 106, 205, 206, 305, 306, 405, 406, 505, 506** | tube lenses |
| **7, 107, 207, 307, 407, 507** | knife-edge mirror |
| **8, 10, 12, 108, 110, 208, 210, 308, 310, 408, 410, 508, 510** | relay lenses |
| **9, 109, 209** | adaptive optics element, or fixed corrective element |
| **11, 111, 211, 311, 411, 511** | dichroic mirror |
| **13, 113, 313, 413, 513** | scanning mirror |
| **14, 114, 214, 314, 414, 514** | laser source |
| **15, 115, 215, 315, 415, 515** | camera |
| **16** | specimen |
| **17, 18** | image planes |
| **19, 20** | objective pupils |
| **21, 22** | planes conjugate to objective pupils 19, 20 |
| **23** | illumination laser beam |
| **24** | detection light rays |
| **25** | glass plate |
| **26, 126, 226, 326** | computer |

### DETAILED DESCRIPTION OF THE INVENTION

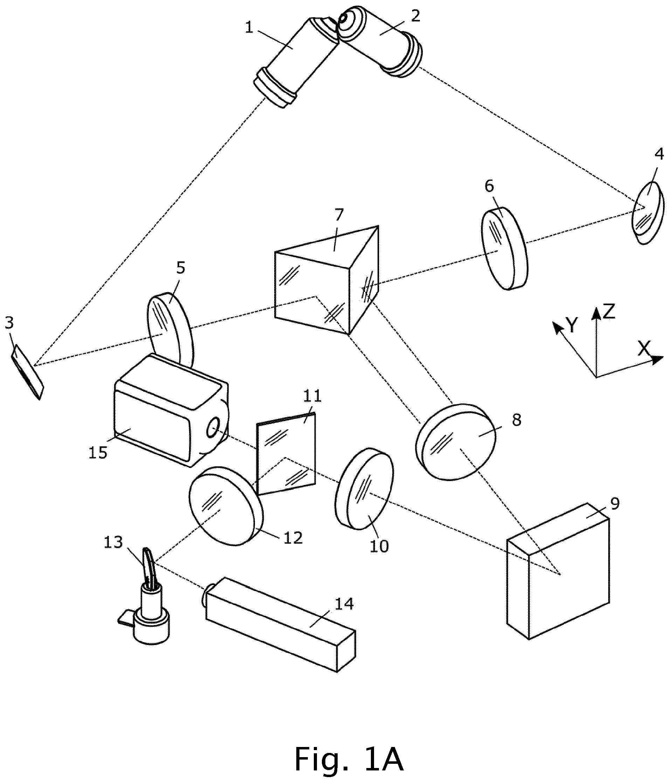

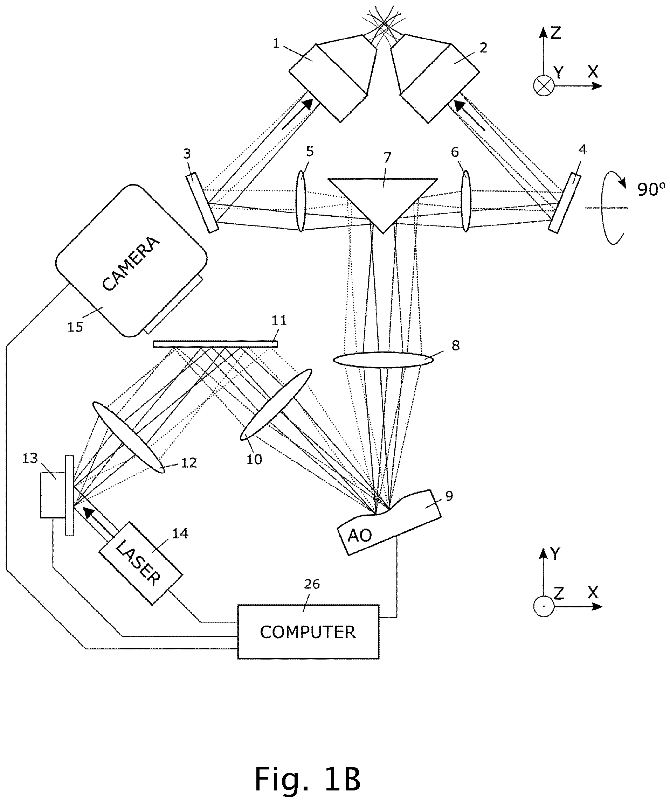

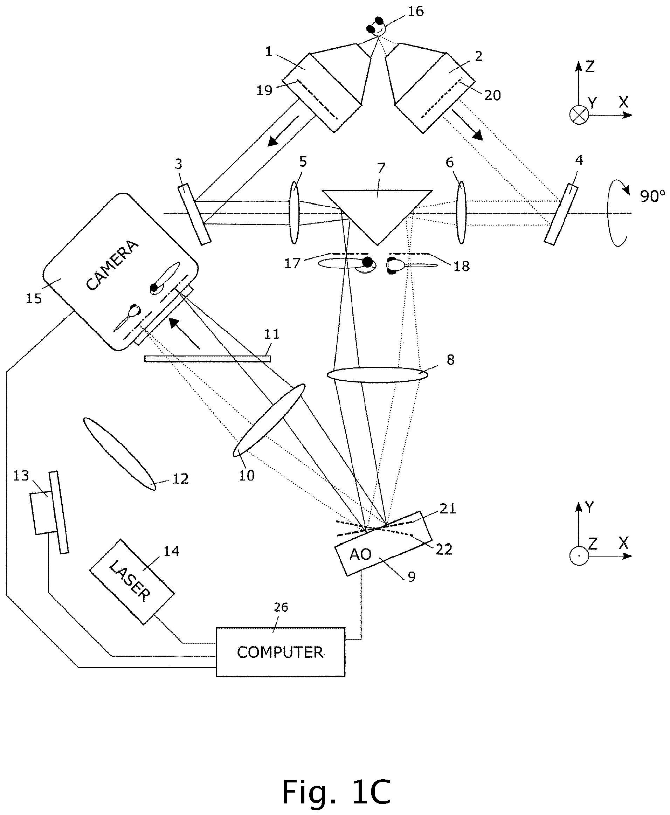

**Fig. 1A** shows a perspective view of a dual-view light-sheet microscope with optical arm combiner, according to an embodiment of the invention, with illumination and detection modes of operation shown in **Figs. 1B** and **1C****.** Objective lenses **1, 2,** folding mirrors **3, 4,** and tube lenses **5, 6** are arranged in a vertical plane, orthogonal to a horizontal (table) plane in which folding mirrors **3, 4,** and tube lenses **5, 6** are arranged together with the rest of the components. A beam combining/separating component **7,** such as a knife-edge mirror combines the two optical arms into one combined arm which contains lenses **8, 10** and **12,** a deformable mirror **9,** a dichroic mirror **11,** a laser source **14,** a scanning mirror **13,** and a camera **15.** The opto-electronic components **9, 13, 14, 15** are controlled by a computer **26.**

The objectives **1, 2** are preferably mounted in such a way that their optical axes are at about 90 degrees to each other. They may also be mounted with their optical axes at other non-orthogonal angles.

The beam combining/separating component **7** may be a knife-edge mirror, e.g., standard right-angle mirror with two reflective surfaces, available from Thorlabs, NJ. The beam combining/separating component **7** may also be a prism mirror or non-₉0-degree angle knife-edge mirror. The reflective surfaces of the mirror are angled so that the optical paths are combined.

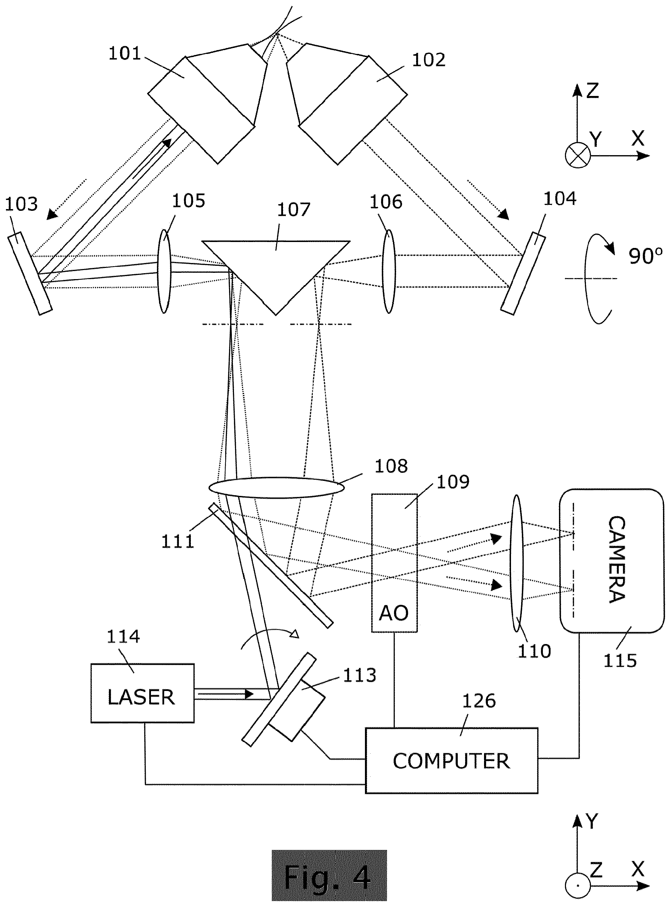

The adaptive optics element **9** may be reflective, such as deformable mirror, spatial light modulator, or digital micro-mirror. In other embodiments, the adaptive optics element can be transmissive (refractive), such as transmissive liquid-crystal spatial light modulator, liquid or deformable lens. In this case, the folding of the light path can be avoided (as shown in **Fig. 4**). Alternatively, instead of an adaptive optics element, a fixed corrective element may be used.

The scanning mirror **13** can be a conventional galvanometric mirror. In other embodiments, the scanning element **13** can be a digital micro-mirror, a spatial light modulator, or an acousto-optic modulator.

The lenses **5, 6, 8, 10, 12** may be achromatic doublets or triplets. Their focal distances are matched in such a way that 4f telescopes are formed by lens pairs **(5,8), (6,8), (8,10), (10,12).** Additionally, the magnification of telescopes made of lenses **(5,8)** and **(6,8)** are such that diameters of objective pupils **19, 20** preferably fill the working area of the adaptive optics element **9**. In other embodiments, they may also under- or over-fill the area, e.g. their diameters may be smaller or larger than the AO element diameter.

In this (open-top) configuration, the objectives **1, 2** are mounted below the specimen. The plane in which objectives, folding mirrors **3, 4** and tube lenses **5, 6** are arranged is orthogonal to the plane of the table (X-Y). Note the rotation of the coordinate system in the top part of the drawing for demonstration purposes. Other configurations, in which the components are arranged in the same plane, or in non-orthogonal planes, are possible.

Conventional mounting hardware, cabling, and control electronics (not shown) may be included according to standard techniques known to those skilled in the art.

### OPERATION- FIRST EMBODIMENT

**Fig. 1B** shows propagation of illumination laser beam through the arms at various angular positions of the scanning mirror **13.** The scanning mirror is optically conjugate to the adaptive optics element **9** via 4f relay arrangement (lenses **12** and **10**). The dichroic mirror **11** is reflective for the laser. The adaptive optics element **9** can modulate incident light phase, thereby shaping the laser beam properties.

Upon reflection from the adaptive optics element **9,** the laser beam refracts at lens **8** and arrives at the knife-edge mirror **7**. Depending on position of the scanning mirror **13,** the laser beam can hit either left or right reflective surface of the knife-edge mirror **7**, and thus can be reflected into either left or right optical arm. The laser beam is focused by either objective **1** or **2**. Within one reflective surface of the knife-edge mirror **7,** the scanning mirror **13** moves the laser beam in such a way that it creates a virtual illuminated plane (light sheet) that is coplanar with the detection plane of other objective.

**Fig. 1C** shows propagation of detection (emitted fluorescence) light through the apparatus. Light from the specimen **16** is collected simultaneously by objectives **1, 2**, becomes focused by tube lenses **5, 6,** and reflects from left or right surface of the knife-edge mirror **7,** respectively. The intermediate image planes **17, 18** are formed side-by-side and are projected on the camera sensor **15** via a 4f relay system of lenses **8, 10.** The dichroic mirror **11** is transmissive to detection light. In this embodiment, the adaptive optics element **9** can modulate phase of the detection light as well as illumination light.

The adaptive optics element **9** is conjugate to pupil planes **19, 20** of objectives via 4f relay systems of lens **8** and **5** (left arm), **8** and **6** (right arm). The conjugate pupil planes **21, 22** at the adaptive optics element location differ only by their tilt (angular shift), which remains constant. Therefore, one adaptive optics element can modulate light phase in both objectives simultaneously by applying optical correction in their pupil (Fourier) planes.

Imaging of the specimen volume is performed by sequential acquisition of individual planes: the specimen is scanned through the light sheet using motorized stages. In this embodiment the objectives remain stationary during volume acquisition.

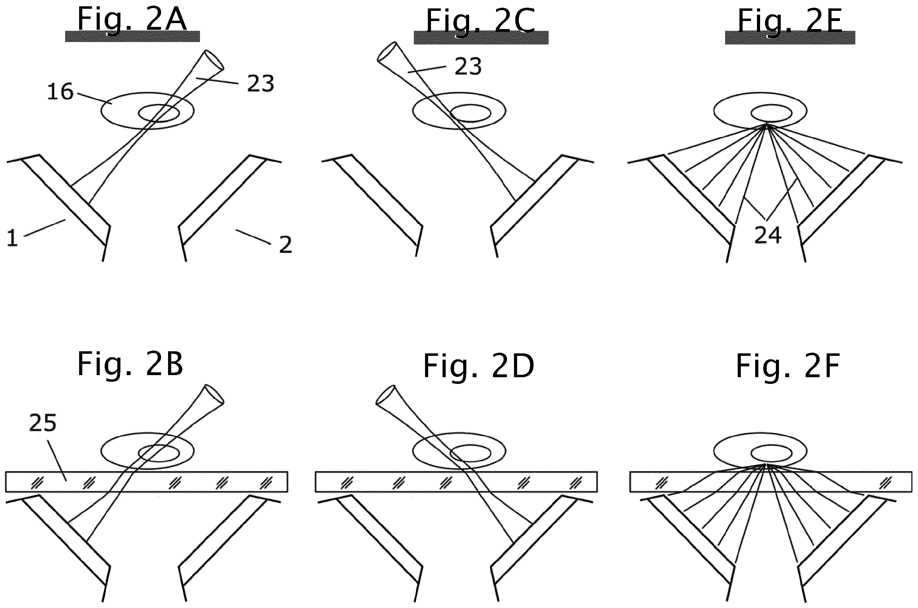

**Figs. 2A-2F** show various sample mounting methods which can be used with this embodiment. The specimen **16** can be suspended in an imaging medium without refractive index mismatch (**Figs. 2A, 2C, 2E**) and illuminated with a scanned laser beam **23** (light-sheet illumination) alternately by objective **1 (****Fig. 2A**) or **2** (**Fig. 2C**). The detection light is captured simultaneously by both objectives (**Fig. 2E**). If there is no refractive index mismatch, no adaptive optics element is needed.

In another configuration, the specimen is separated from the immersion medium by the flat glass plate **25** (**Figs. 2B, 2D, 2F**). The glass plate can be a part of microfluidic chip, cuvette, chamber, or it may be a glass coverslip in conventional specimen mounting. The glass plate is preferably oriented at the same angle with respect to each of the optical axes of the two objectives. The plate can be made of glass or another transparent material, such as plastic. The specimen is illuminated with the scanned laser beam by objective **1 (****Fig. 2B)** or **2 (Fig. 2D****)**. The detection light is captured simultaneously by both objectives **(****Fig. 2F****).** The glass plate **25** in this case creates optical aberrations by changing the optical path of illumination and especially detection rays. The detection path aberrations can be corrected by using an adaptive optics element **9** (shown in **Fig. 1**) in both arms simultaneously due to spatial symmetry of the system. Additionally, the adaptive optics can correct illumination beam profile, although the corrective shape should take into account chromatic effects (difference between illumination and detection wavelength). Alternatively, instead of an adaptive optics element, a fixed corrective element may be used.

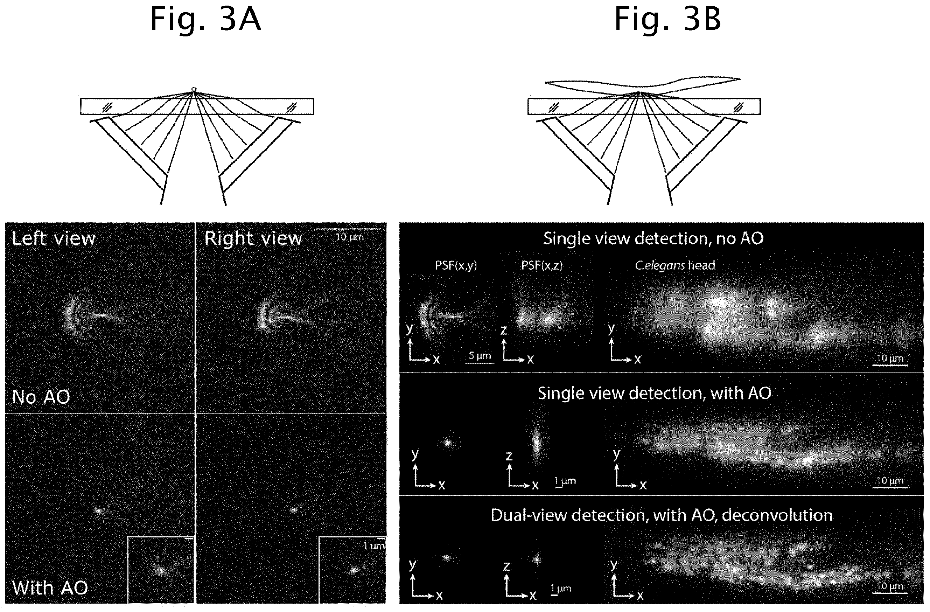

**Figs. 3A-3B** show images acquired with the flat glass plate **25** configuration. **Fig. 3A** is a schematic sketch and corresponding image grid that shows left and right views with no adaptive optics (top row) and with adaptive optics (bottom row). An image of fluorescent bead (0.17 µm in diameter) demonstrates strong optical aberrations seen through both objectives (**Fig. 3A**) when no adaptive optics is applied (deformable mirror **9** is flat). When corrective shape is applied to the deformable mirror, the aberrations are corrected in both views simultaneously, and the point-spread function becomes small and round in both views.

The corrective shape of deformable mirror can be found using various algorithms, based on iterative optimization of the point-spread-function metrics, or by using direct sensing of the distorted wavefront with a wavefront sensor.

### FINDING THE OPTIMAL DEFORMABLE MIRROR SHAPE

In order to find the optimal shape of deformable mirror **9**, sub-diffraction sized fluorescent beads can be used as a specimen, such as 0.17 µm green FluoSpheres (Invitrogen). The beads are mounted on top of a glass plate (e.g., inside a microfluidic chip), and imaged multiple times with variations of the deformable mirror shape. Using a bead image in two views at each time step, the algorithm iteratively searches for the best deformable mirror shape that minimizes the point-spread function in both left and right view simultaneously. The algorithm can employ a PSF quality metric based on two-dimensional Gaussian fit of the PSF image. The resulting two-view image metric is an average of the PSF metrics from the two views: $metric \left(PSF\right) = 0.5 metric \left(PSF, left view\right) + 0.5 metric \left(PSF, right view\right)$ where $metric \left(PSF, view\right) = 0.5 { FWHM}_{x} \left(PSF, view\right) + 0.5 { FWHM}_{y} \left(PSF, view\right) ,$ and where *FWHMₓ*, *FWHM_{y}* are the Gaussian fit full widths at half maximum along x and y directions, respectively. The algorithm can iteratively optimize the deformable mirror shape based on that metric using Stochastic Parallel Gradient Descent (Vorontsov et al, Optics Letters, 1997, 22, 12).

Once the optimal shape of deformable mirror is found using fluorescent beads and the optimization algorithm above, the same mirror shape can be used for imaging other specimens, such as *C.elegans* worm in another microfluidic chip, as long as the glass plate thickness remains the same between chips.

**Fig. 3B** is a schematic sketch and corresponding images of a nervous system of nematode *C.elegans*, in which neurons are labelled with a fluorescent protein GCAMP6. In this example, the specimen is illuminated with a Gaussian laser beam (NA 0.2, wavelength 488 nm) digitally scanned across the detection plane. The image stack is acquired by scanning the sample through illumination plane using a motorized stage. The three rows of images show single-view detection with no adaptive optics (top), single-view detection with adaptive optics (middle), and dual-view detection with adaptive optics and deconvolution (bottom). In each row, images of a fluorescent bead are shown to demonstrate PSF shape in different projections. The beads used are 0.17 µm green FluoSpheres (Invitrogen).

In this example, without adaptive optics correction the neurons are not distinguishable due to highly distorted PSF. With single-view imaging and adaptive optics correction, single neurons become distinct. With dual-view imaging and deconvolution using BigStitcher/Fiji software, PSF becomes nearly isotropic and therefore the image resolution is further improved.

### IMAGE PROCESSING

The images are processed as follows, combining various specific techniques known to a person skilled in the field (Preibisch et al, Efficient Bayesian-based multiview deconvolution. Nature Methods, 2014). The processing steps used to generate the images in **Fig. 3B** are as follows:
1. The image stacks are un-skewed (un-sheared) to remove the translation component from the mechanical scanning (X-axis). This can be done, for example, by applying affine (shear) transformation to every image of the stack using e.g. BigStitcher/Fiji plugin (https://imagej.net/BigStitcher).
2. In order to match the two views in space, one of them is reflected (flipped) along Y-axis and rotated 90° around Y axis.
3. The two views (stacks) are registered one to the other in order to precisely match them in space, using one of many available registration algorithms (using e.g. BigStitcher).
4. Using images of the point-spread function for each arm (theoretical or experimentally measured), the two views are deconvolved using the one of the multi-view deconvolution methods (e.g. in BigStitcher).

The image stack resulting from multi-view deconvolution has isotropic spatial resolution and superior image quality compared to the individual views (Fig. 3B).

In alternate embodiments, different metrics and optimization algorithms can be used for multi-view PSF quality estimation and adaptive optics optimization. Alternatively, instead of an adaptive optics element, a fixed corrective element may be used.

**Fig 4** shows an additional embodiment, in which adaptive optics element **109** affects only the detection path, but not the illumination path. The adaptive optics element in this embodiment is transmissive (refractive), such as transmissive liquid-crystal spatial light modulator, liquid or deformable lens. Alternatively, instead of an adaptive optics element, a fixed corrective element may be used.

In this embodiment the adaptive optics modulates only the detection light in the two arms. This aspect can be used for reshaping the detection point-spread function independently of illumination PSF. The detected light is separated from the illumination path by dichroic mirror **111**, then it enters the adaptive optics element **109**. The basic operation principles are similar to other embodiments. The illumination laser beam from laser source 114 reflects at various angular positions at the scanning mirror **113**, then refracts at lens **108** and arrives at the knife-edge mirror **107**. The dichroic mirror **111** is transmissive for the laser. Depending on position of the scanning mirror **113**, the laser beam can hit either left or right reflective surface of the knife-edge mirror **107,** and thus can be reflected into either left or right optical arm. The laser beam is focused by either objective **101** or **102**. Within one reflective surface of the knife-edge mirror **107,** the scanning mirror **113** moves the laser beam in such a way that it creates a virtual illuminated plane (light sheet) that is coplanar with the detection plane of other objective.

The detection light from specimen is collected simultaneously by objectives **101**, **102**, becomes focused by tube lenses **105**, **106**, and reflects from left or right surface of the knife-edge mirror **107,** respectively. The detection light is relayed via 4f system of lenses **108, 110** and projected on the camera sensor **115**. The dichroic mirror **111** is reflective to detection light. The adaptive optics element **109** is placed in the infinity space of the detection light, in a plane conjugate to back focal planes of both objective **101** and **102**.

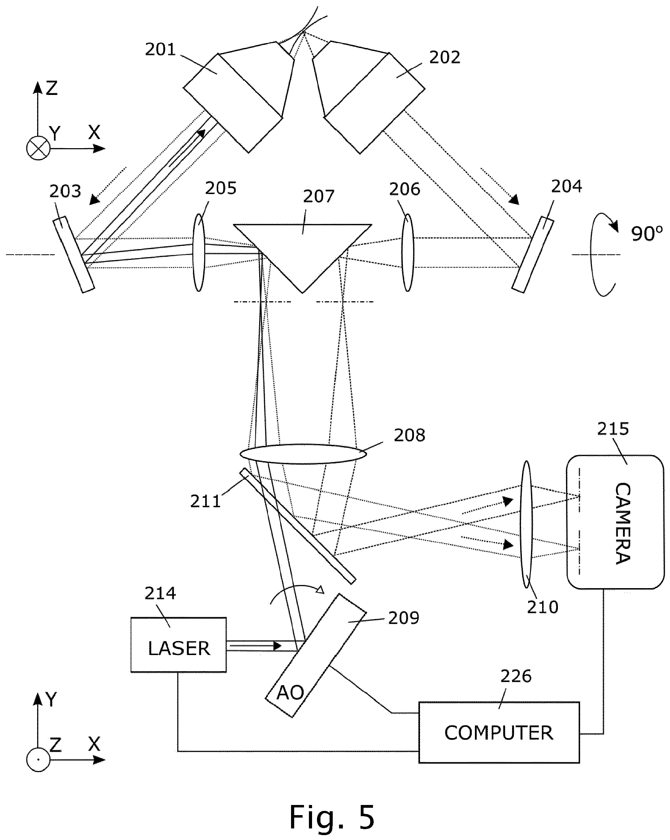

**Fig. 5** shows another embodiment, in which adaptive optics element **209** affects only the illumination path, but not the detection path. In this embodiment, the adaptive optics element is reflective. No separate scanning mirror is shown here, because the adaptive optics element (such as deformable mirror, spatial light modulator, or digital micro-mirror) can typically apply time-varying phase tilt to scan the beam like a scanning mirror. Alternatively, instead of an adaptive optics element, a fixed corrective element maybe used.

The adaptive optics element **209** can apply phase modulation in order to create various illumination profiles, such as Gaussian, Bessel, Airy or another type of beam intensity distribution. This aspect can be used to create complex illumination profiles without affecting the detection PSF.

Additionally, the adaptive optics can apply a constant phase tilt in order to switch the laser between the two illumination arms, and a time-varying phase tilt to scan the laser beam in light-sheet mode.

The illumination laser beam from laser source **214** reflects off the adaptive optics element **209**, then refracts at lens **208** and arrives at the knife-edge mirror **107**. The dichroic mirror **211** is transmissive for the laser. Depending on phase tilt imposed by the adaptive optics element **209**, the laser beam can hit either left or right reflective surface of the knife-edge mirror **207,** and thus can be reflected into either left or right optical arm. The laser beam is focused by either objective **201** or **202**. Within one reflective surface of the knife-edge mirror **207,** the adaptive optics element **209** scans the laser beam in such a way that it creates a virtual illuminated plane (light sheet) that is coplanar with the detection plane of other objective.

The detection light from specimen is collected simultaneously by objectives **201**, **202**, becomes focused by tube lenses **205**, **206**, and reflects from left or right surface of the knife-edge mirror **207,** respectively. The detection light is relayed via 4f system of lenses **208**, **210** and projected on the camera sensor **215**. The dichroic mirror **211** is reflective to detection light, so the detection light is diverged to the camera without passing through adaptive optics.

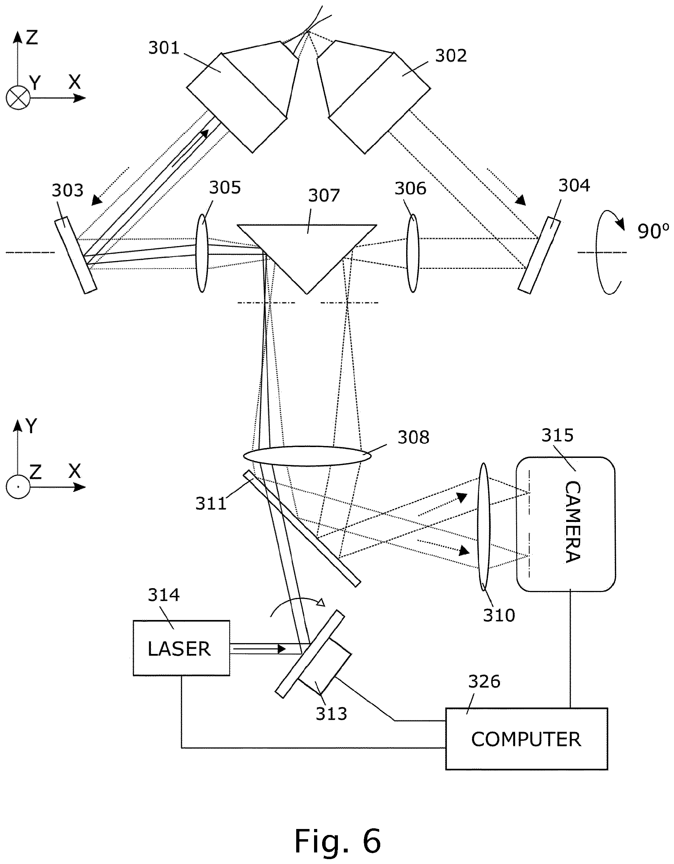

**Fig. 6** shows an additional embodiment, in which no adaptive optics element is present. This aspect can be used to build a low-cost multi-view light-sheet microscope.

Basic operation principles are similar to other embodiments. The illumination laser beam from laser source **314** reflects off the scanning mirror **313,** then refracts at lens **308** and arrives at the knife-edge mirror **307**. The dichroic mirror **311** is transmissive for the laser. Depending on phase tilt imposed by the scanning mirror **313,** the laser beam can hit either left or right reflective surface of the knife-edge mirror **307,** and thus can be reflected into either left or right optical arm. The laser beam is focused by either objective **301** or **302.** Within one reflective surface of the knife-edge mirror **307,** the scanning mirror **313** scans the laser beam in such a way that it creates a virtual illuminated plane (light sheet) that is coplanar with the detection plane of other objective.

The detection light from specimen is collected simultaneously by objectives **301**, **302**, becomes focused by tube lenses **305**, **306**, and reflects from left or right surface of the knife-edge mirror **307,** respectively. The detection light is relayed via 4f system of lenses **308, 310** and projected on the camera sensor **315**. The dichroic mirror **311** is reflective to detection light.

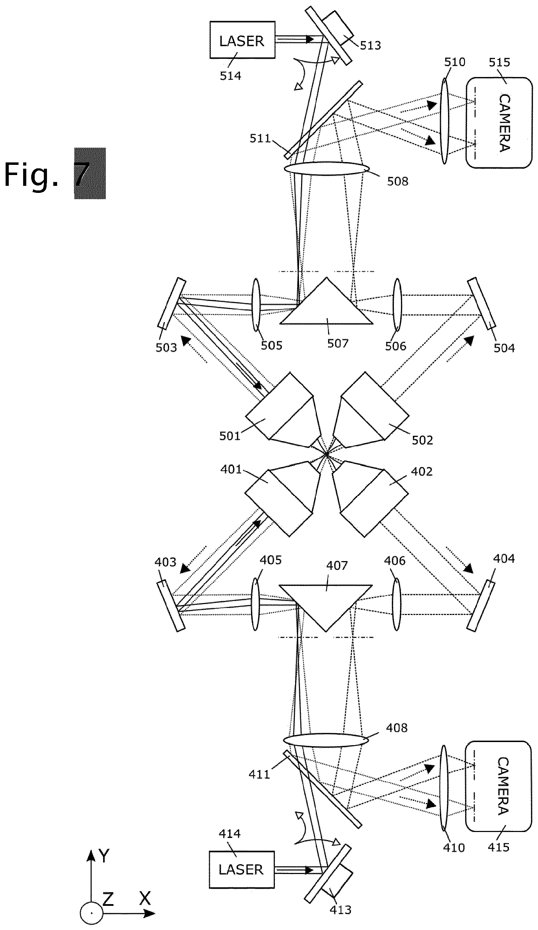

**Fig. 7** shows an additional embodiment, in which imaging and illumination is performed from four different directions.

This embodiment demonstrates a four-view microscope by combining two embodiments shown in **Fig. 6** and arranging them in one horizontal plane (X-Y) around the specimen. The scanning mirrors **413** and **513** scan the laser beams up-down (Y-Z plane) to produce light-sheet illumination planes, and steer the beams left-right (X-Y plane) to switch lasers between corresponding arms.

The various embodiments presented here allow construction of a multi-view light-sheet microscope with lower cost and higher versatility than it was possible in prior art. Specifically, these embodiments eliminate unnecessary duplication of opto-electronic components in a multi-view light-sheet microscope. The combined optical arm can be used two-way, for both illumination and detection. Additional adaptive optics elements can be integrated into the design in order to modulate phase and intensity of illumination light, detection light, or both. Alternatively, instead of an adaptive optics element, a fixed corrective element may be used.

Although the embodiments shown here contain many specificities, these should not be construed as limiting the scope of the embodiments but as merely providing illustrations of some embodiments. For example, the scanning mirror can be replaced with a spatial light modulator, acousto-optic modulator, digital micro-mirror, or tip-tilt mirror. The adaptive optics element, if present, can perform the scanning by applying appropriate phase tilts over time. Alternatively, instead of an adaptive optics element, a fixed corrective element may be used. The beam scanning can be performed along one axis (to generate the light sheet), or along two axes (to generate the light sheet and translate it along detection axis).

In the presented embodiments the light-sheet illumination is generated by scanning the laser beam in the detection plane. In alternative embodiments, the light sheet may be generated by other conventional methods, such as using a cylindrical lens and a slit.

Multiple images of the specimen cross-section (image stacks) can be acquired at different times and positions by scanning the specimen stage through the detection focal plane using a motorized stage. Alternatively, image stacks may be acquired by optical translation of the illumination and detection planes through the specimen, or by physical translation of the objective lenses.

The knife-edge mirror **7** can be replaced with an alternative device, such as a prism. The spatial arrangement of embodiments can take alternative shapes by using mirrors, additional lenses, or prisms. In the embodiments presented, the camera acquires images of the specimen from two views, which may limit the size of each field of view. In alternative embodiments, two cameras may be used together with a beam-splitter in order to extend each field of view.

The two views of the specimen can be used for improving image resolution by the means of digital post-processing, such as multi-view fusion and multi-view deconvolution. Additionally, the two views can be used for estimation of three-dimensional point-spread function of the system. This information can be used, for example, in feedback algorithms to control the adaptive optics.

Additionally, the two simultaneous orthogonal views of the specimen can be used for fast three-dimensional tracking of small specimens, for example in single-molecule imaging.

## Claims

1. A light-sheet fluorescence microscope comprising:
a laser producing a light beam;
two objective lenses arranged with their optical axes in different directions to provide different views;
a scanning mirror configured to direct the light beam into distinct portions of an optical path;
a beam combining/separating component configured to direct the light beam in the distinct portions of the optical path alternately into each of the two objective lenses, and to combine detection light from the two objective lenses into the distinct portions of the optical path;
a dichroic mirror that separates the light beam from detection light; and
a camera sensor focused simultaneously on the focal planes of said two objective lenses.

2. The light-sheet fluorescence microscope of claim 1 wherein
said scanning mirror is configured to generate a light sheet illumination pattern by scanning said light beam alternately in each of the distinct portions of the optical path.

3. The light-sheet fluorescence microscope of claim 1 further comprising:
an adaptive optics element configured to correct optical aberrations in each of said two objective lenses.

4. The light-sheet fluorescence microscope of claim 1 further comprising:
a fixed corrective element configured to correct optical aberrations in each of said two objective lenses.

5. The light-sheet fluorescence microscope of claim 3 wherein
said adaptive optics element is configured to pre-compensate for optical aberrations in said illumination light beam.

6. The light-sheet fluorescence microscope of claim 4 wherein
said fixed corrective element is configured to pre-compensate for optical aberrations in said illumination light beam.

7. The light-sheet fluorescence microscope of claim 1 wherein the scanning mirror and adaptive optics element are implemented by a single device.

8. A light-sheet fluorescence microscope comprising two microscopes of claim 1, arranged to achieve illumination and detection from four directions.

9. A method for light-sheet fluorescence microscopy comprising:
simultaneously receiving light from a specimen by two objective lenses arranged with their optical axes in different directions to provide different views;
combining the received light into distinct portions of a single optical path; and
simultaneously imaging the combined light by a single camera sensor.

10. The method of claim 9 further comprising simultaneously reshaping the combined light by a single adaptive optics element or fixed corrective element.

11. The method of claim 9 further comprising generating a laser beam by a single laser; scanning the laser beam alternatively to follow the distinct portions of the single optical path; illuminating the specimen by the distinct laser beams focused by the two objective lenses.
